# EUROPEAN PATENT APPLICATION

(11) **EP 4 711 197 A1**
(43) Date of publication of application: **18.03.2026**
(21) Application number: 25202727.1
(22) Date of filing: 17.09.2025
(51) Int. Cl.: B60L 53/66, B60L 53/31, B60L 53/60, B60L 53/65, B60L 53/67

(54) **METHOD FOR MONITORING THE OCCUPATION OF AN ELECTRIC VEHICLE CHARGING PARK**

(30) Priority: 17.09.2024 IT 202400020695
(71) Applicant: Enel X S.r.l., 00191 Rome (IT)
(72) Inventor: Pirozzi, Giovanni Leonardo, 00191 Roma (RM) (IT)
(74) Representative: Petraz, Gilberto Luigi

(57) **Abstract**

Method for monitoring an electric vehicle charging site comprising a plurality of charging stalls provided with parked vehicle presence sensors and a plurality of electrical outlets provided with charging management and monitoring means. The described method makes it possible to determine the charging stalls illegally occupied by non-electric vehicles or by electric vehicles that are not being charged because they have never started it or have performed and finished it but have not been removed within the allowed time limits, and to report the anomalies detected.

## Description

### FIELD OF THE INVENTION

The present description relates generally to electric vehicle charging stations and, more specifically, to an electric vehicle charging station parking control and monitoring system.

### STATE OF THE ART

The number of plug-in electric vehicles (PEVs) and plug-in hybrid vehicles (PHEVs) on the road around the world is growing rapidly. This ever-increasing number of electric vehicles requires a space provided with an adequate number of charging stations, which allows the aforementioned electric vehicles to connect and charge in various conditions, times and places, both during the day and at night.

Electric charging stations are often located in car parks and stalls configured to accommodate dedicated charging columns to provide charging for electric vehicles. Although the number of available charging stations is increasing, generally a car park or equivalent facility will only have a few spaces for cars that can access the charging stations. When a non-electric vehicle, or an electric vehicle that does not perform a charging operation, is parked in the charging stalls for electric vehicles, the charging station cannot be used and is therefore not available to charge an electric vehicle. In addition to the fact that, in many jurisdictions, parking a non-electric car in an electric vehicle car park is illegal, this situation can cause significant inconvenience to electric vehicle owners, making it difficult to find a charging station available when needed, and also resulting in lost profits for the charging site manager because it is prevented from supplying electricity.

Therefore, it is important and necessary to take measures to ensure that charging points for electric vehicles are used correctly and remain available for vehicles that actually need them.

### SUMMARY OF THE INVENTION

The present description describes a method for detecting violations related to the abusive occupancy of the charging places for electric vehicles, based on all possible combinations between the occupation detections of the stalls and the detections of the start of the charging sessions.

In many jurisdictions parking a non-electric car in a non-electric car park is illegal. For example, in Italy, according to Art. 158, paragraph 1, letters h-bis and h-ter of Legislative Decree no. 285/1992 and subsequent amendments to the Highway Code, stopping and also parking non-electric cars are prohibited in the spaces reserved for charging electric vehicles.

In addition to the situations considered by the prohibition described above, other situations of abuse in the use of charging stalls are also detected among electric vehicles that are not performing the charging operation while occupying a charging space or that remain in the charging space more than an hour after the completion of the charging phase. Violations of this type can already be detected through the charging management and monitoring system that attributes a defined status of penalty, and a corresponding rate, to cars that are no longer charging their batteries but still have the charging outlet plugged-in and the charging session still open, not yet finished.

All other situations of abuse of the stalls destined for charging electric vehicles are not automatically detectable and are the object of the method according to the present description.

The aforementioned method crosses the binary status of occupation (free, busy) of a series of stalls with the binary status ("charging in progress", "charging not in progress") of the charging sessions, in order to identify abusive occupations by granting a tolerance time to carry out the operations necessary to start and end the sessions.

A notification ("alarm") will be sent when a violation is detected. The notification may be sent to the authority being charged of imposing sanctions and possibly removing the car that is committing the violation.

The method subject-matter of the present description provides for the initial mapping of all the outlets and stalls present in a given parking place. Said outlets and said stalls are registered and reported in a table that will also comprise information on the status of the electrical outlet activity, information on the occupation of the stall and an indication of the remaining time available before the abusive occupancy of a stall is reported.

Each time a charging session is started at a charging column at the checked site, a series of checks are carried out to determine whether this charging session can be associated with a car that occupies one of the available stalls or not. These checks take advantage of both the detections of the charging column and the detections of the sensors present in the stalls and suitable for determining their occupation.

Based on the outcome of these checks, it is established what the actual situation is within a caseload that envisages various possibilities. The most frequent cases among all those possible are:
- the normal case in which a car occupies a charging stall and after a few minutes the driver starts a charging session;
- the case in which a car occupying a charging stall starts a charging session from an outlet different from the one provided for that stall;
- the case in which the car is parked outside the stalls corresponding to the column affected by the detected charging session, and therefore is not detected by the sensors;
- the case in which a car occupies a charging stall and does not start any charging session;
- the case where a car ends a charging session but does not free the stall.

### BRIEF DESCRIPTION OF THE DRAWINGS

Further objects, features and advantages of the present invention will become clearer from the following detailed description, given in an exemplary and nonlimiting manner and illustrated in the accompanying figures in which:
Fig. 1 illustrates an electric vehicle charging site comprising two charging columns, each with two outlets and two associated stalls;
Fig. 2 illustrates the charging site of Fig. 1 in which there is a car that is being charged;
Fig. 3 illustrates the charging site of Fig. 1 in which there are four cars connected to the charging cables so that there is no correspondence between the electric charging outlet and the stall;
Fig. 4 illustrates the charging site of Fig. 1 in which there are two cars positioned in such a way that their presence in the stall cannot be detected;
Fig. 5 illustrates a criterion example of a prioritization criterion for a charge started by an outlet of a site comprising three columns and six total stalls;
Fig. 6 illustrates the charging site of Fig. 1 in which there is a car parked in a stall;
Fig. 7 illustrates the charging site of Fig. 1 in which there is a car parked in a stall and connected to the electric charging outlet of said stall;
Fig. 8 illustrates the charging site of Fig. 1 in which there are two cars parked in respective stalls, in which one car is connected to the electric charging outlet of its stall and the other car is connected to a charging outlet different from the one of its stall;
Fig. 9 illustrates the charging site of Fig. 1 in which there are three cars parked in respective stalls, in which one car is connected to the electric charging outlet of its stall, another car is connected to a charging outlet different from the one of its stall and a third car is not connected to the charging column;
Fig. 10 illustrates the charging site of Fig. 1 in which there are three cars parked in respective stalls, in which two cars are connected to the electric charging outlet of their stall and another car is connected to a charging outlet different from the one of its stall;
Fig. 11 illustrates the charging site of Fig. 1 in which there are three cars parked in respective stalls, in which one car is connected to the electric charging outlet of its stall, another car is connected to a charging outlet different from the one of its stall and a third car is not connected to the charging column;
Fig. 12 illustrates the charging site of Fig. 1 in which there are two cars parked in respective stalls, in which one car is connected to the electric charging outlet of its stall and the other car is connected to a charging outlet different from the one of its stall;
Fig. 13 illustrates the charging site of Fig. 1 in which there are four cars parked in respective stalls, in which one car is connected to the electric charging outlet of its stall, another car is connected to a charging outlet different from the one of its stall and two cars are not connected to the charging column;
Fig. 14 illustrates the charging site of Fig. 1 in which there are four cars parked in respective stalls, in which one car is connected to the electric charging outlet of its stall, two cars are connected to a charging outlet different from the one of its stall and one car is not connected to the charging column;
Fig. 15 illustrates the charging site of Fig. 1 in which there are four cars parked in respective stalls, in which one car is connected to the electric charging outlet of its stall, two cars are connected to a charging outlet different from the one of its stall and one car is not connected to the charging column;
Fig. 16 illustrates the charging site of Fig. 1 in which there are three parked cars, in which one car is positioned in such a way that its presence in the stall cannot be detected and is still connected to an electric charging outlet, another car is connected to the electric charging outlet of its stall, and a third car is not connected to the charging column;
Fig. 17 illustrates a flowchart of a preferred embodiment of a part of the method according to the present description, relative to the monitoring of the stalls;
Fig. 18 illustrates a flowchart of a preferred embodiment of a part of the method according to the present description, relative to the monitoring of the charging outlets;
Fig. 19 illustrates a flowchart of a preferred embodiment of a part of the method according to the present description, relative to the monitoring of the charging outlets, and
Fig. 20 illustrates a flowchart of a preferred embodiment of a part of the method according to the present description, relative to the generation of the alarm signal.

The following description of exemplary embodiments refers to the accompanying drawings. The same reference numerals in different drawings identify the same or similar elements. The following detailed description does not limit the scope of the invention. The scope of the invention is defined by the appended claims.

### DETAILED DESCRIPTION OF THE INVENTION

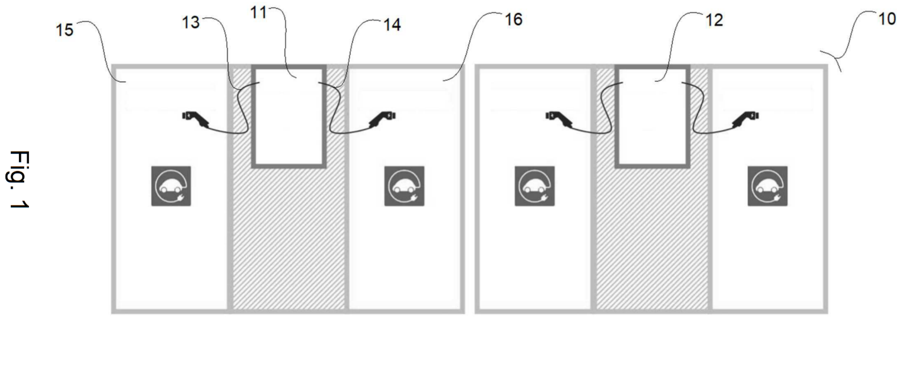

With reference to the attached Fig. 1 attached to the present application, an example of electric vehicle charging site comprising two charging columns 11, 12, each with two electrical outlets 13, 14, and two stalls 15, 16 associated with said electrical outlets is taken into consideration.

This example of a charging site may be isolated or part of a car park equipped for electric vehicles comprising, in turn, a plurality of charging sites of this type.

Said columns 11, 12 are obviously all equipped with systems for checking the electricity supplied and for detecting the connection and disconnection times of the electrical outlets 13, 14, as well as the start and end times for charging the connected vehicles and the time intervals for connecting to the outlets and charging each vehicle.

Furthermore, the stalls 15, 16 of said electric vehicle charging site 10 are provided with sensors adapted to determine the possible presence of a parked vehicle.

The method that is the subject of the present description, first of all, performs a mapping of all the outlets and all the stalls present at each charging site. For example, the following scheme can be used, illustrated by way of example in the attached figures from 2 to 16: the site charging columns are associated with integers and the electrical outlets and charging stalls are associated with an identification number (hereinafter referred to for brevity as ID) composed of two disjoint integers and separated, for example, by a dot, where the first integer number indicates the column and the integer number after the dot indicates the corresponding electrical outlet and charging stall. By choosing the ID of the electrical outlet equal to that of the stall, each stall is associated with the corresponding electrical outlet.

In the example case of a site composed of two columns (numbered 1 and 2) associated with two outlets and two stalls each (numbered 1.1, 1.2, 2.1 and 2.2), the list of all the IDs of stalls and outlets can be as the one shown in table 1 below:

**Table 1**

| Charging stall | Charging outlet |
|---|---|
| 1.1 | 1.1 |
| 1.2 | 1.2 |
| 2.1 | 2.1 |
| 2.2 | 2.2 |

According to a preferred embodiment of the described method, a mapping of the charging site 10, of the columns 11, 12 of the charging stalls 15, 16, and of the corresponding charging outlets 13, 14 is then performed, and the detections of the check systems of the charging columns and of the sensors adapted to determine the possible presence of a parked vehicle are processed.

Whenever a change of status is detected, whether it is attributable to the charging of a column outlet or to the occupation of a stall, a table representing the current scenario is generated or updated.

Said table will preferably consist of 4 columns, as in the example of table 2 below which shows, for each column, examples of values indicative of possible states.

**Table 2:**

| Stall | Outlet | Timer | Alarm |
|---|---|---|---|
| 1.1; 1.2; 2.1; 2.2 etc. | 1.1; 1.2; 2.1; 2.2 etc. | mm:ss | 0; 1; Stand-by |
| ... | ... | ... | ... |

The first column shows the ID of the site stalls that are occupied at the time the table is generated, according to the chosen methods, for example those described above.

The second column includes the active charging sessions of the outlets associated with the stalls shown in the first column, attributed, in the event that a car is not connected to the stall outlet in which said car is parked, according to a precise scheme that provides for the application of a predefined criterion of association between outlet and stall and vice versa.

In the third column there is a timer (countdown) that indicates the remaining time available before the abusive occupancy of a stall is reported. The value of the available residual time is arbitrary and parametric, and is determined during the configuration phase. The tables generated after the expiration of a timer show a first value, for example 00:00; when a timer is cancelled by the start of a charging session, a second value is shown, for example "-". In the following of the present description it is assumed that the allowed time is 5 minutes. The timer will start whenever the stall occupation determination sensor reports the presence of a car, and will stop only if a charging session is associated with the stall occupation, or if the stall is freed. In this case, in the new table generated or updated after freeing a stall, the row corresponding to the stall occupied will no longer be present.

In the boxes in the fourth column, a value is entered which categorizes the status of the stalls with respect to the status of the outlets and indicates the presence of an anomaly to be reported, that is, the abusive occupancy of a stall.

For example, said value can be chosen equal to:
"0" - If the corresponding cell in the second column (relating to the outlets) contains the indication of an outlet having an ongoing charging session; in essence "0" indicates that the occupation of the charging stall is normal and no anomalies have been detected.
"Stand-by" - If in the third column a timer is active and has not yet expired; in essence "Stand-by" indicates that there is a potential violation in progress and, if this is not resolved when the timer expires, it will become a violation.
"1" - If the corresponding cell in the first column (relating to the stalls) contains the indication of an occupied stall and the timer in the third column has expired, i.e. no charging has been associated with the occupied stall; in essence "1" indicates that a violation has been detected.

When a cell in the fourth column has the value "1", the method according to the present description generates an alarm signal relating to the charging site in question to report a violation.

Whenever a charging session is started by a charging site outlet, the method according to the present description must establish whether this session is associated with a car occupying one of the available stalls, or not.

In general terms, when a charging is started, all the stalls are reviewed in order to check which is the one occupied closest to the outlet that has started the charging session, in order to associate the just started charging with the stall occupied closest to the aforementioned outlet. When there is only one occupied stall this determination happens in a simple way. In the event that there are more than one stalls occupied at the same time, the determination may be more complex.

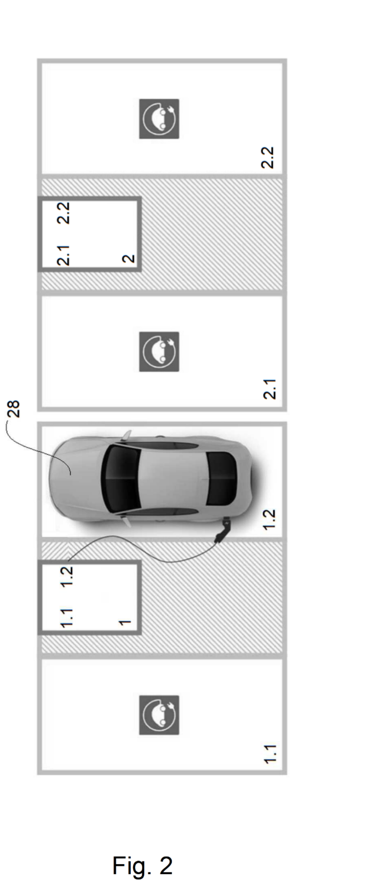

If, for example, the presence of a car 28 parked at the stall 1.2 is detected at the charging site, and shortly thereafter a charging is activated from the outlet 1.2, the association is immediate as the situation will most likely be the one illustrated in the attached Fig. 2.

However, the situations that can arise are many and varied and it is necessary to establish effective ways to determine if the cars parked on the site are actually being charged, or are illegally occupying a charging stall of the aforementioned site.

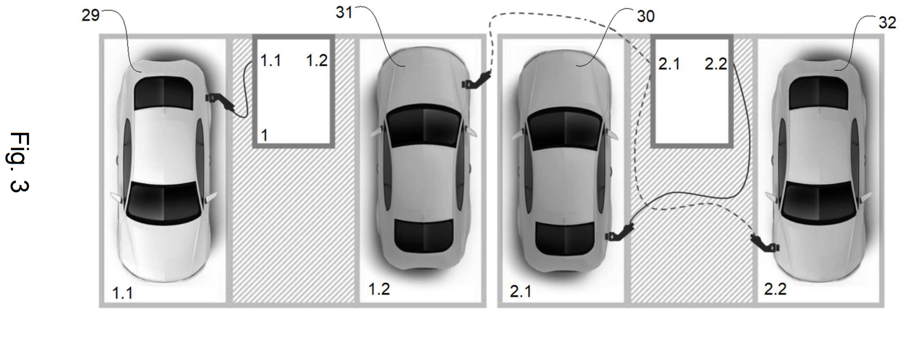

With reference to the attached Fig. 3, it is illustrated the charging site where there are four cars connected to the charging cables so that there is no correspondence between the electric charging outlet and the stall if not in only one case, that of the car 29 parked in the stall 1.1 and connected to the corresponding outlet 1.1.

The charging session of the outlet 2.1, for example, cannot be associated with the car 30 parked at the stall 2.1 as this car is already being charged from another outlet, the outlet 2.2. It is therefore necessary to determine whether to associate said charging session of the outlet 2.1 with the car 31 parked in the stall 1.2 or with the car 32 parked in the stall 2.2. To do this, a possible criterion to apply may be the following, based on the general criterion of proximity, assuming that the driver has started charging from the outlet closest to the stall occupied by his/her car:
a) It is checked for the presence of a parked and not charging vehicle in the stall corresponding to the outlet that has started the charging session (in the case of the example, the stall 2.1);
b) If a parked car is not detected, or there is one that is already being charged from another outlet: it is checked for the presence of a parked and not charging vehicle in the other free stall of the same column (in this case stall 2.2);
c) If a parked car is not yet detected, or there is one that is already being charged from another outlet:
   c1) If the outlet in question is the one on the left, indicated with the serial number 1, an attempt is made to detect the car being charged at the outlet on the right of the column to the left of the one from which the charging was started.
   c2) If the outlet is on the right, indicated with the serial number 2, an attempt is made to detect the car being charged at the outlet on the left of the column to the right of the one from which the charging was started.
d) If it is not yet possible to determine and associate the charging with a parked car:
   d1) If the outlet in question is the one on the left, indicated with the serial number 1, an attempt is made to detect the car being charged at the outlet on the left of the column to the right of the one from which the charging was started;
   d2) If the outlet in question is the one on the right, indicated with the serial number 2, an attempt is made to detect the car being charged at the outlet on the right of the column to the left of the one from which the charging was started.

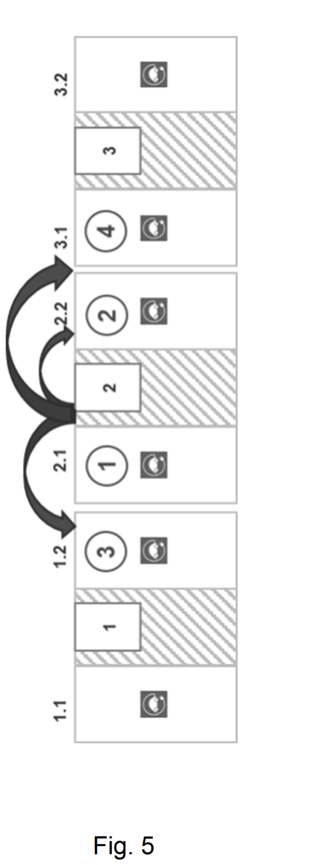

Fig. 5 illustrates an example of the criterion described above with reference to a charging session started from the outlet 2.1 of a site comprising 3 columns and 6 total stalls.

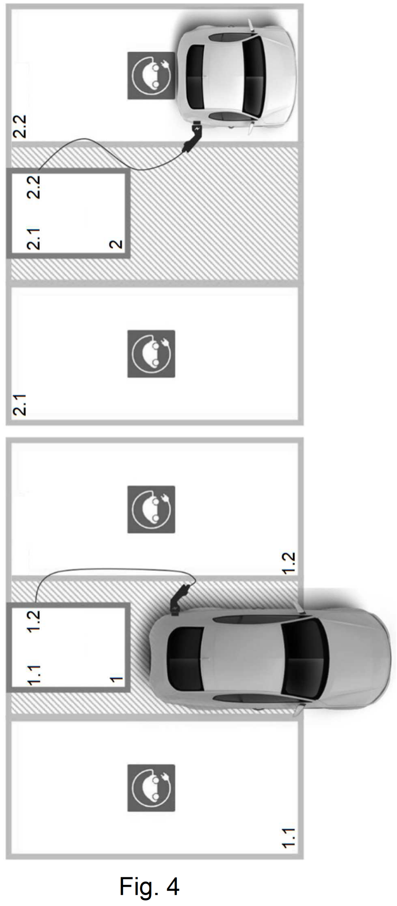

Since the charging cables are usually 5 m long and never exceed 10 m, after a certain number (for example three) of iterations of the previously listed steps without having been able to determine the position of the charging car, it is assumed that the car is parked outside the stall, or in a position such that it is not detected, as in the examples illustrated in the attached Fig. 4.

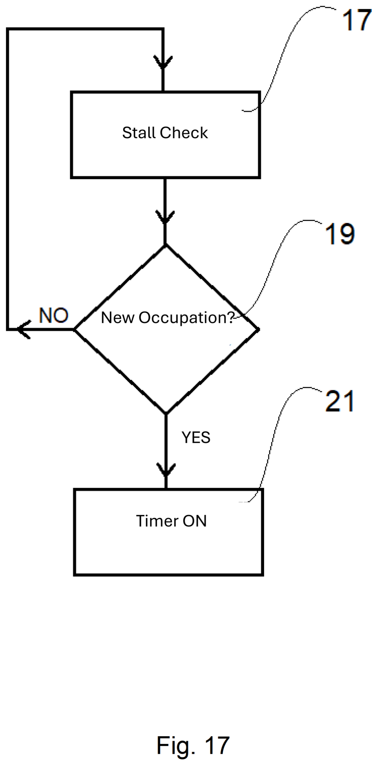

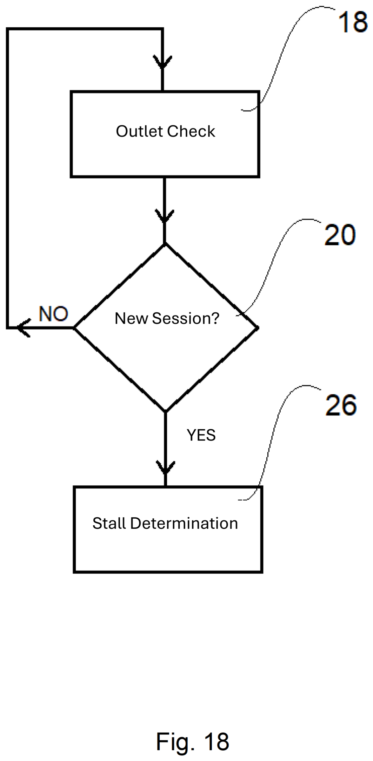

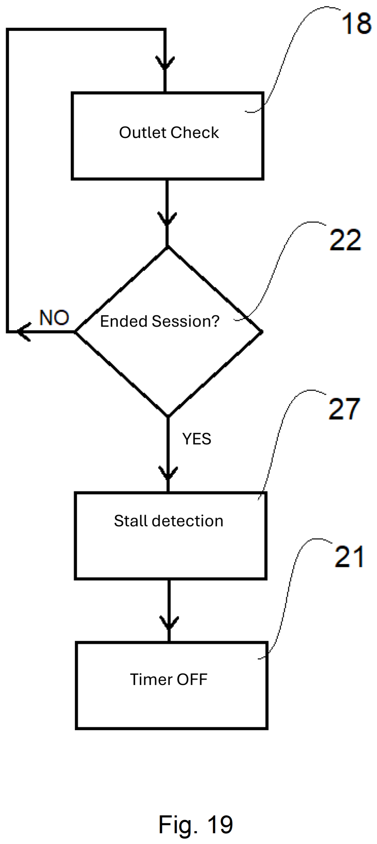

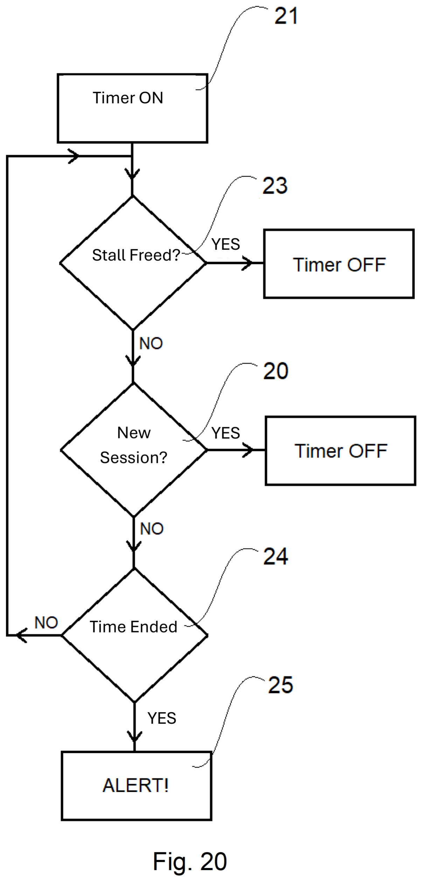

In accordance with the method according to the present description and with reference to the attached Figs. 17 - 20, a monitoring of an electric vehicle charging site is therefore performed, comprising a plurality of charging stalls provided with parked vehicle presence sensors and a plurality of electrical outlets provided with charging management and monitoring means, performing:
a check 17 of the stall presence sensors to determine new occupancies 19 and a check 18 of the electrical outlets to determine their operating status, the start 20 of new charging sessions or the conclusion 22 of ongoing charging sessions;
in the event that a new occupation of a charging stall is determined:
   A timer is initialized 21 with a first time limit for the subsequent initialization of a charging session; in the meantime, said plurality of electrical outlets is checked 18 to identify an electrical outlet that has started 20 a charging session.

If no electrical outlet which has started a charging session is detected and the new occupied charging station has not been freed 23 within said first time limit 24, an alarm signal is generated 25; if, on the other hand, an electrical outlet which has started said new charging session is determined, then the stall occupied by the vehicle that started said new charging session is determined 26 (for example by means of the procedure described above) and, if said first time limit has not expired, the vehicle that started said new charging session is associated with the new occupied charging stall and the timer is reset.

In accordance with the method according to the present description, moreover, the monitoring 18 of the electrical outlets is also adapted to determine 22 an electrical outlet that has concluded one of the ongoing charging sessions. In the event that an electrical outlet which has concluded its charging session is determined, the stall previously associated and corresponding to said electrical outlet is determined 27;
A timer is initialized 21 with a second time limit for freeing the stall occupied by the vehicle connected to said electrical outlet;
if said stall is not freed 23 or a new charging session 20, and the consequent determination process 26, are not started within said second time limit, an alarm signal is generated 25.

Some examples of cases detectable by the method according to the present description are described below.

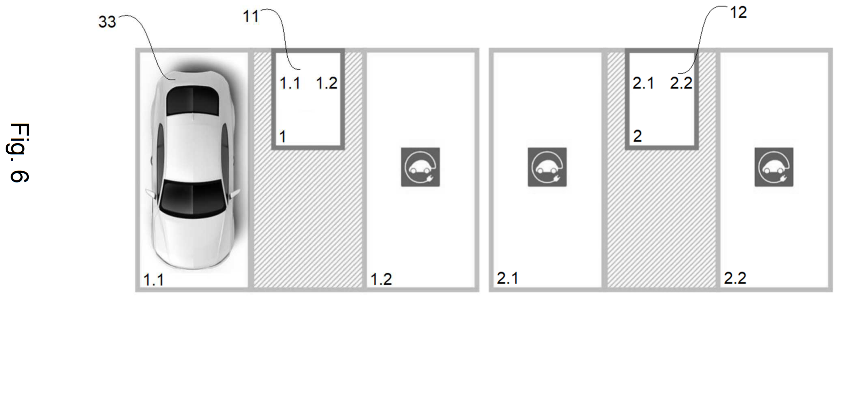

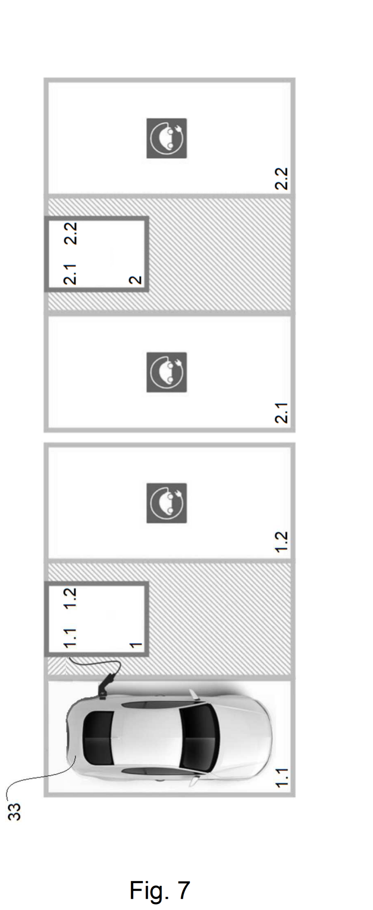

In the standard case illustrated in Figs. 6 and Fig. 7, a car 33 occupies a charging stall, the stall 1.1, and after a few minutes the driver starts a charging session from the outlet 1.1 corresponding to the stall 1.1.

When the car 33 occupies the stall, it is detected by the stall presence sensors and, according to the method subject-matter of the present description, the following table 3 is generated, assuming that the maximum time allowed to start a charging has been preset equal to 5 minutes:

**Table 3**

| Stall | Outlet | Timer | Alarm |
|---|---|---|---|
| 1.1 | - | 05:00 | Stand-by |

The charging session has not yet been started and therefore the "outlet" field is empty, the timer has just been initialized and there is a potential alarm to be emitted, for now in a stand-by condition.

Subsequently, when the charging outlet 1.1 is plugged in the car 33 and the charging session is started (assuming that this occurs before the expiry of the 5 minutes maximum allowed time, for example after 1:30 minutes, and the alarm signal has not therefore been activated to report a violation) a new table is generated, or the previous table is updated, filling it in as the table 4 below, in which the timer is interrupted with 03:30 minutes remaining before expiry:

**Table 4**

| Stall | Outlet | Timer | Alarm |
|---|---|---|---|
| 1.1 | 1.1 | 03:30 | 0 |

If, on the other hand, a charging session had not been started within the allowed time tolerance, when the timer expired, the following table 5 would have been generated:

**Table 5**

| Stall | Outlet | Timer | Alarm |
|---|---|---|---|
| 1.1 | - | 00:00 | 1 |

In this case, the value 1 in the fourth column "Alarm", results in the issue of an alarm signal that can be used, for example, to report the ongoing violation to the authorities.

This same alarm indication in the table is then possibly cancelled when a charging session is started and, consequently, a new table similar to Table 4 is generated.

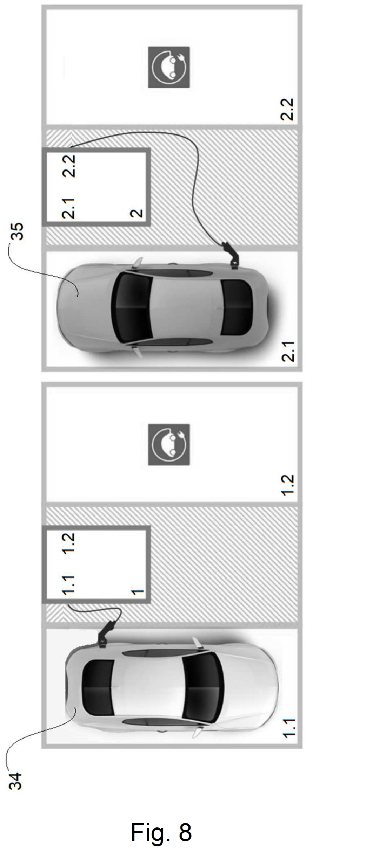

With reference to the attached Fig. 8, there may be cases in which one of the cars 34, 35 present in the stalls of the site is charged by connecting to an outlet different the one corresponding to the stall occupied. In Fig. 8 one of the cars (car 35) parked at the charging site occupies the stall 2.1 but is connected to the outlet 2.2.

Applying the charging session association method described above, it is determined that the charging session started from the outlet 2.2 was started by the car 35 parked in the stall 2.1.

The detection made results in table 6 being filled in as below in relation to the site illustrated in the attached Fig. 8:

**Table 6**

| Stall | Outlet | Timer | Alarm |
|---|---|---|---|
| 1.1 | 1.1 | - | 0 |
| 2.1 | 2.2 | - | 0 |

Although the outlet and the charging stall in this case do not coincide, the vehicle occupying the stall 2.1 cannot be fined because it is still being charged. The system can provide a warning signal but not generate an alarm as no violations are detected.

The method according to the present description manages to determine situations in which improperly parked cars are present at the charging site. In the example case illustrated in the attached Fig. 4, in which both cars being charged at the site of the columns 1 and 2 are not detectable by the occupation sensors of the charging stall, applying the charging session association method described above, the following table 7 is filled in:

**Table 7**

| Stall | Outlet | Timer | Alarm |
|---|---|---|---|
| - | 1.2 | - | 0 |
| - | 2.2 | - | 0 |

Since the car park occupation detection sensors are usually positioned in the middle of the parking stall, in the example case illustrated in the attached Fig. 4 none of the parked cars 40, 41 can be detected.

Although the case is anomalous, it is not possible to determine with certainty whether a car is parked in prohibited parking (car 40) or whether it has simply not been detected by the stall occupation sensors (car 41). In any case, the method according to the present description does not detect any abusive occupation of a stall reserved for charging electric vehicles, as the charging sessions are active. For this reason, an alarm of detected violation will not be reported.

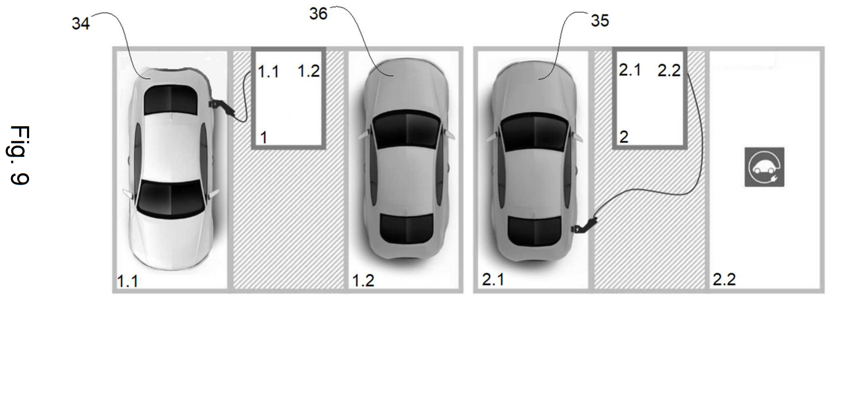

Fig. 9 attached illustrates a situation in which a car 36 occupies the stall 1.2 of the charging site already comprising two cars 34, 35 with an ongoing charging session. At the change of status, the new table 8 below is generated:

**Table 8**

| Stall | Outlet | Timer | Alarm |
|---|---|---|---|
| 1.1 | 1.1 | - | 0 |
| 2.1 | 2.2 | - | 0 |
| 1.2 | - | 05:00 | Stand-by |

If no change of status is detected before the timer expires, the abusive occupancy is reported, and table 8 is updated into table 9 below:

**Table 9**

| Stall | Outlet | Timer | Alarm |
|---|---|---|---|
| 1.1 | 1.1 | - | 0 |
| 2.1 | 2.2 | - | 0 |
| 1.2 | - | 00:00 | 1 |

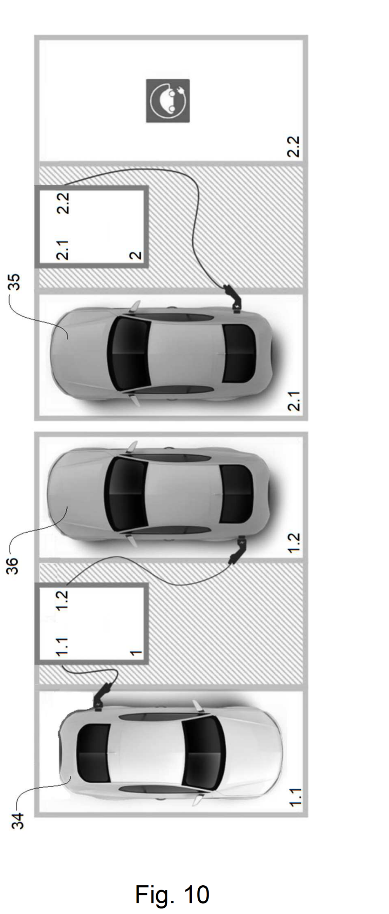

If, on the other hand, the car 36 parked at the stall 1.2 started the charging session from the corresponding outlet, as illustrated in the attached Fig. 10, the timer would be interrupted and the violation would not be reported. The table would be updated as table 10 below:

**Table 10**

| Stall | Outlet | Timer | Alarm |
|---|---|---|---|
| 1.1 | 1.1 | - | 0 |
| 2.1 | 2.2 | - | 0 |
| 1.2 | 1.2 | - | 0 |

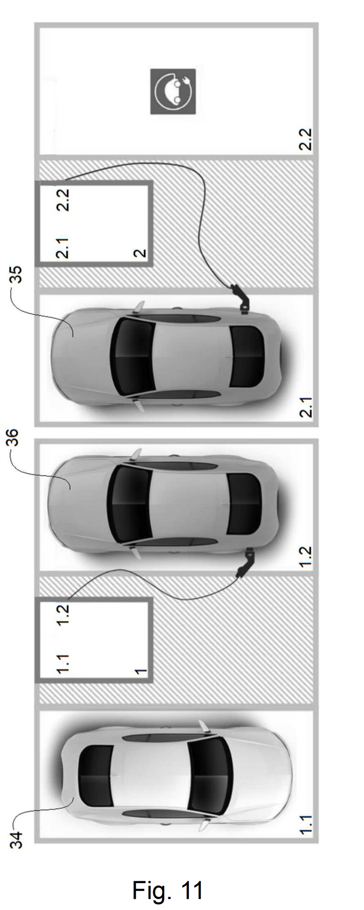

In the situation described above, when the car 34 parked in the stall 1.1 ends the charging and the outlet 1.1 ends the supply of electric current, the situation illustrated in the attached Fig. 11 occurs. Correspondingly, a new status is registered, a new update of the table is generated and table 11 below is issued:

**Table 11**

| Stall | Outlet | Timer | Alarm |
|---|---|---|---|
| 1.1 | - | 05:00 | Stand-by |
| 2.1 | 2.2 | - | 0 |
| 1.2 | 1.2 | - | 0 |

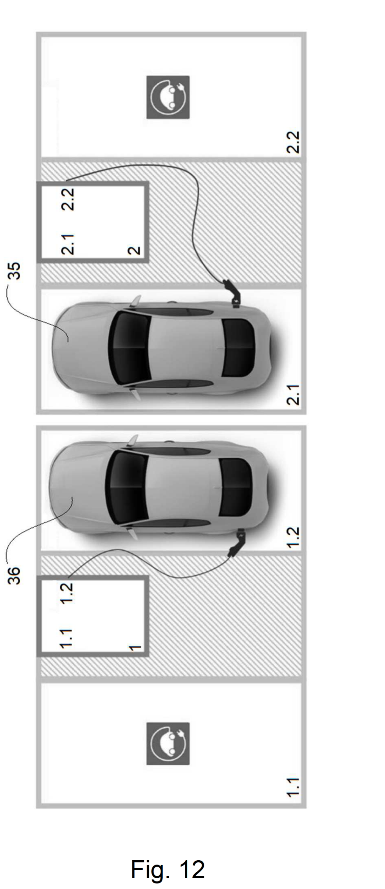

in which the timer relative to the time allowed to the car 34, which has finished charging, to leave the stall occupied is initialized. If at the end of this time the car 34 occupying the stall 1.1 has been removed as illustrated in Fig. 12 then no alert of violation will be generated. Conversely, if the car is not removed, the alarm will be sent to report violation of abusive occupancy of charging stall.

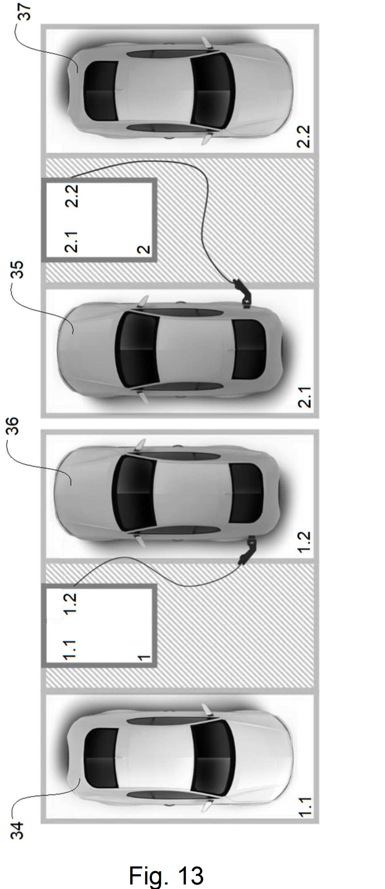

With reference to the attached Fig. 13, in the situation illustrated in which, following the interruption of charging from the outlet 1.1, the stall 2.2 is occupied by a car 37 before the car 34 occupying stall 1.1 has been moved, the table 12 below is issued:

**Table 12**

| Stall | Outlet | Timer | Alarm |
|---|---|---|---|
| 1.1 | - | 02:35 | Stand-by |
| 2.1 | 2.2 | - | 0 |
| 1.2 | 1.2 | - | 0 |
| 2.2 | - | 05:00 | Stand-by |

This time there are two occupied stalls that do not correspond to a charging. The timer associated with the stall 1.1 is not interrupted (because the car 34 that finished charging has not yet been removed) and a new timer on the stall 2.2 is started, because another car 37 has occupied the corresponding stall. If, within the expiry of the first of the two timers, a new table reporting a charging session attributable to the stall 1.1 will not be issued, the violation alert will be sent.

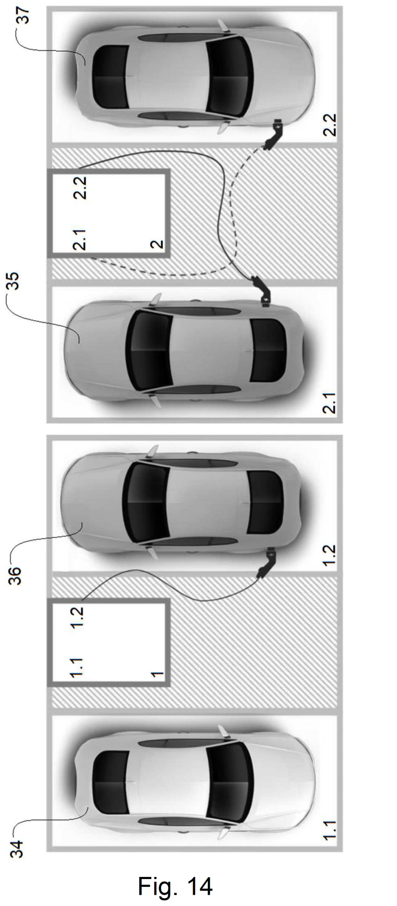

In the event that, as illustrated in Fig. 14, a charging session had been started from the outlet 2.1 in the meantime, based on the charging session association method described above, this charging session would be associated with the stall 2.2, interrupting the stall timer 2.2 and letting the stall timer 1.1 run as reported in the new updated table as table 13 below.

**Table 13**

| Stall | Outlet | Timer | Alarm |
|---|---|---|---|
| 1.1 | - | 01:15 | Stand-by |
| 2.1 | 2.2 | - | 0 |
| 1.2 | 1.2 | - | 0 |
| 2.2 | 2.1 | - | 0 |

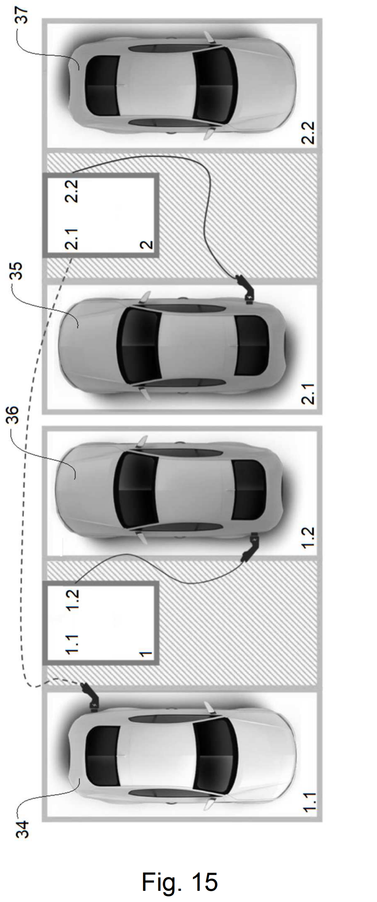

The charging session association criterion described above is based on empirical considerations as it is not possible, with current car parks and stalls, to determine with absolute certainty which charging site stall the active sessions actually correspond to. For example, the situation of the above example could also be as illustrated in the attached Fig. 15, although less likely because it is more uncomfortable and difficult for the user.

However, even if the model described in the table issued were not consistent with reality, the only drawback would be an advance of a few minutes in sending the abusive occupancy alarm.

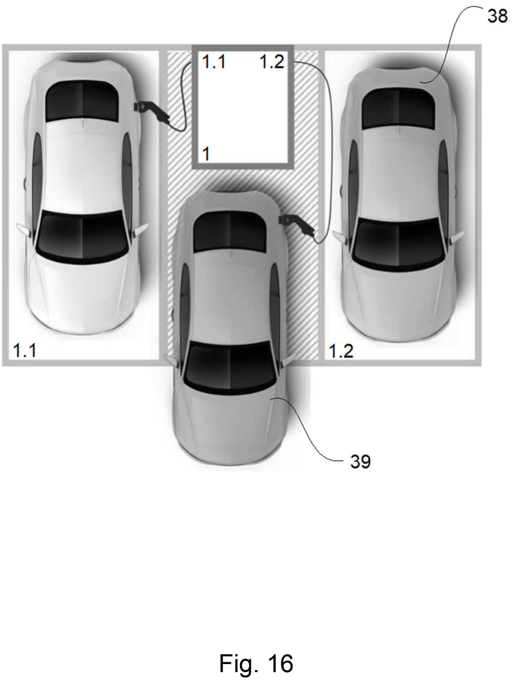

In general, the presence sensors currently installed in the stalls of the charging sites are physical objects installed at the stalls, often in a central position with respect to the surface of the stall itself, and cannot detect the presence of any cars parked outside their range of action. There are, therefore, some borderline cases that cannot be detected by the current technology of the stall occupation detection sensors. An example is illustrated in the attached Fig. 16, in which the violation committed by the car 38 occupying the charging stall 1.2 and the prohibition on parking the car 39 parked in front of the charging column are not detected. The table generated in this case, in fact, would be similar to table 14 below:

**Table 14**

| Stall | Outlet | Timer | Alarm |
|---|---|---|---|
| 1.1 | 1.1 | - | 0 |
| 1.2 | 1.2 | - | 0 |

## Claims

1. A method for monitoring an electric vehicle charging site comprising a plurality of charging stalls provided with parked vehicle presence sensors and a plurality of electrical outlets provided with charging management and monitoring means, said method comprising:
monitoring (17) the presence sensors to determine (19) the occupations of said stalls, and
monitoring (18) the electrical outlets of said plurality of electrical outlets to determine their operating status and checking (20) for the presence of a new started charging session;
if a new occupied charging stall is determined:
initializing (21) a timer with a first time limit;
checking (20) for the presence of an electrical outlet which has started a charging session within said first time limit;
if no electrical outlet which has started a charging session is detected and said new occupied charging stall has not been freed (23) within said first time limit (24),
generating (25) an alarm signal;
if an electrical outlet which has started said new charging session is determined:
searching (26) for the stall occupied by the vehicle which has started the new charging session;
if said stall is determined before the expiry of said first time limit, associating the vehicle which has started said new charging session with the new occupied charging stall;
resetting said timer.

2. A method according to claim 1, wherein monitoring (18) the electrical outlets to determine their operating status further comprises checking (22) for the presence of an ended charging session;
if an electrical outlet which has ended its charging session is determined:
identifying (27) the stall occupied by the vehicle which has ended its charging session;
initializing (21) a timer with a second time limit;
if freeing of the stall occupied by the vehicle which has ended its charging session (23) or starting of a new charging session (20) does not occur within said second time limit (24), generating (25) an alarm signal;
otherwise resetting said timer.

3. A method according to claim 1 or claim 2, wherein said alarm signal is associated with an indication of an ongoing abusive occupancy of the charging stall.

4. A method according to one or more of claims 1 to 3, wherein searching (10) for the stall occupied by the vehicle which has started the new charging session comprises choosing the occupied stall, still not associated with any electrical outlet, which is closer to the electrical outlet that has started said new charging session.

5. A method according to one or more of claims 1 to 4, wherein said electric vehicle charging site (10) comprises two charging columns (11, 12), each with two electrical outlets (13, 14), and two stalls (15, 16) associated with said electrical outlets.

6. A method according to claim 5, wherein a mapping of said charging columns (11, 12), said electrical outlets (13, 14) and of said stalls (15, 16) of the electric vehicle charging site (10) is performed.

7. A method according to claim 6, wherein said charging columns (11, 12) are associated with integers, said electrical outlets (13, 14) and said stalls (15, 16) are associated with an identification number, ID, composed of two disjoint integers, wherein the first integer number indicates the column and the second number indicates the electrical outlet and the charging stall corresponding to said electrical outlet.

8. A method according to one or more of claims 5 to 7, wherein said mapping comprises generating and/or updating a table comprising a plurality of columns in which a first column comprises the identification numbers, ID, of said stalls (15, 16); a second column comprises the identification numbers, ID, of the electrical outlets (13, 14) having active charging sessions associated with the stalls indicated in the first column; a third column comprises a timer indicating the remaining time available before abusive occupancy of the stalls indicated in the first column is reported; a fourth column comprises a value indicating the presence of an anomaly to be reported with said alarm signal.

9. A method according to claim 8, wherein
if a new occupied charging stall is determined, a line in said table is updated by writing:
in a cell of said first column, the identification number, ID, of said new occupied stall;
in a cell of said third column, a timer indicating the remaining time available before the generation of an alarm with respect to said first time limit, and wherein
if an electrical outlet which has started a charging session within said first time limit is identified, the row of said table is updated by writing:
in a cell of said second column, the identification number, ID, of said electrical outlet;
in a cells of said fourth column, the indication not to emit alarm signals, and wherein
if an electrical outlet which has started a charging session within said first time limit is not identified, the row of said table is updated by writing:
in a cell of said fourth column, the indication to emit an alarm signal.
